(19) Europäisches Patentamt
European Patent Office
Office européen des brevets

(11) Numéro de publication: **0 424 279 A1**

(12) **DEMANDE DE BREVET EUROPEEN**

(21) Numéro de dépôt: **90420420.3**

(22) Date de dépôt: **26.09.90**

(51) Int. Cl.5: **C08G 77/62**, C08G 77/54, C04B 35/58

(30) Priorité: **17.10.89 FR 8913802**

(43) Date de publication de la demande: **24.04.91 Bulletin 91/17**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Bobichon, Charles**
**1, rue d'Angile**
**F-69005 Lyon(FR)**
Inventeur: **Lebrun, Jean-Jacques**
**Ctre hospitalier Lyon-Sud Chemin du Grand Revoyet**
**F-69310 Pierre-Benite(FR)**

(74) Mandataire: **Seugnet, Jean Louis et al**
**RHONE-POULENC CHIMIE SERVICE BREVETS CHIMIE 25 Quai Paul Doumer**
**F-92408 Courbevoie Cédex(FR)**

# (54) Procédé de préparation de polyorganosilazane de masse moléculaire élevée.

(57) La présente invention concerne un procédé de préparation de polyorganosilazane, caractérisé en ce que :

a) - on fait réagir au moins un composé organosilicié (1) présentant par molécule au moins 3 atomes de chlore sur une quantité au moins sensiblement stoechiométrique d'une amine tertiaire organique,

b) - on ajoute au produit obtenu en a) un diorganodichlorosilane (2) suivant un rapport molaire (1)/(2) compris entre 0,1 et 9, et de 0,06 à 3 % en poids d'eau par rapport au poids de (1) et (2),

c) - on effectue l'aminolyse du mélange obtenu sous b) en ajoutant un composé comportant au moins un groupement $NH_2$ ou NH,

d) - on élimine les chlorhydrates d'amine formés et on sépare le polyorganosilazane.

Le polyorganosilazane obtenu est utilisable comme précurseur en vue de l'obtention par pyrolyse de céramique à base de carbonitrure de silicium.

EP 0 424 279 A1

# PROCEDE DE PREPARATION DE POLYORGANOSILAZANE DE MASSE MOLECULAIRE ELEVEE

La présente invention concerne un procédé de préparation de polyorganosilazane et son utilisation comme précurseur en vue de l'obtention par pyrolyse de céramique à base de carbonitrure de silicium.

Un procédé connu pour obtenir des polyorganosilazanes est de faire réagir par exemple l'ammoniac $NH_3$ sur un organochlorosilane ou ses mélanges (FR-A-1 379 243, FR-A-1 392 853 et FR-A-1 393 728).

Il est cependant souhaitable, pour obtenir un polyorganosilazane exploitable industriellement, que ce polyorganosilazane présente notamment les caractéristiques suivantes :

a) - le polyorganosilazane doit être obtenu avec un rendement pondéral (basé sur le silicium) supérieur à 90 %, de préférence 95 %,

b) - le polyorganosilazane doit présenter un rendement pondéral après pyrolyse supérieur à 50 %, de préférence supérieur à 70 %,

c) - il est en outre souhaitable que, d'une part, le polyorganosilazane présente une masse molaire moyenne en poids supérieure à 15 000 g/mole, de préférence supérieure à 30 000 pour être filable dans de bonnes conditions, et que, d'autre part, le polyorganosilazane présente une structure comportant, comme enseigné par EP-A-235 486, une fonctionnalité moyenne $(f^N)_m$ strictement supérieure à 2, c'est-à-dire qu'il provienne de l'aminolyse d'un mélange d'organochlorosilanes présentant 2 et 3 atomes de chlore par molécule.

Toutefois le problème majeur à résoudre pour l'aminolyse d'un tel mélange réactionnel, est que les silanes porteurs de 3 atomes de chlore sont beaucoup plus réactifs au cours de la réaction d'aminolyse que les silanes porteurs de 2 atomes de chlore.

Cette différence de réactivité a pour conséquence l'obtention, avec un rendement pondéral médiocre, d'un polyorganosilazane de masse molaire faible.

On a déjà proposé des solutions pour résoudre au moins partiellement le problème ci-dessus.

Ainsi EP-A-235 486 enseigne un procédé de préparation d'un polyorganosilazane en 3 étapes : au cours d'une première étape on fait l'aminolyse d'un diorganodichlorosilane et au cours d'une deuxième étape on fait réagir l'aminolysat obtenu au cours de la première étape sur un composé organosilicié comportant au moins 3 atomes de chlore par molécule, en présence d'une amine tertiaire, en particulier la pyridine en vue d'obtenir un réticulat que l'on aminolyse au cours d'une troisième étape.

Le procédé décrit dans ce brevet est efficace mais il est long et coûteux à mettre en oeuvre, en particulier il nécessite 2 réactions d'aminolyse.

US-A-4 659 850 enseigne un procédé de préparation d'un polyorgano(hydro)silazane dans le but d'obtenir un rendement élevé en silicium, ainsi qu'un polysilazane de masse molaire élevée. Selon ce procédé on effectue tout d'abord une complexation d'un organo(hydro)dichlorosilane par une base forte, en particulier la pyridine ou la picoline, et on ammonolyse le complexe, le mélange réactionnel pouvant contenir 500 ppm d'eau, ou moins.

Le polyorgano(hydro)silazane obtenu présente théoriquement une fonctionnalité de 2 et une masse molaire encore insuffisante, ce qui conduit à un rendement en céramique médiocre.

La présente invention concerne un procédé de préparation de polyorganosilazane, caractérisé en ce que :

a) - on fait réagir au moins un composé organosilicié (1) présentant par molécule au moins 3 atomes de chlore sur une quantité au moins sensiblement stoechiométrique d'une amine tertiaire organique,

b) - on ajoute au produit obtenu en a) un diorganodichlorosilane (2) suivant un rapport molaire (1)/(2) compris entre 0,1 et 9, en présence de 0,06 à 3 % en poids d'eau par rapport au poids total du composé (1) et du silane (2), cette eau pouvant être introduite en tout ou partie à l'étape a),

c) - on effectue l'aminolyse du mélange obtenu sous b) en ajoutant un composé comportant au moins un groupement $NH_2$ ou NH,

d) - on élimine les chlorhydrates d'amines formés et on sépare le polyorganosilazane.

Par quantité sensiblement stoechiométrique d'une amine tertiaire par rapport au silane (1) on entend un rapport environ molaire d'amine tertiaire par rapport au silane (1).

Un excès d'amine tertiaire organique peut être utilisé, mais il est recommandé d'éliminer l'amine tertiaire en excès avant d'effectuer l'étape b) afin de ne pas complexer également par l'excès de l'amine tertiaire le diorganodichlorosilane (2) ajouté lors de cette étape b).

De préférence, l'étape a) est mise en oeuvre en utilisant une quantité sensiblement stoechiométrique d'amine tertiaire organique vis à vis du composé organosilicié (1).

Ce composé organosilicié (1) est de préférence choisi parmi :

- les organotrichlorosilanes de formule :

$RSiCl_3$

dans laquelle R est choisi parmi un atome d'hydrogène et les radicaux alkyle en $C_1$-$C_6$, vinyle et phényle,

- les organochlorodisilanes de formule :

$R^1{}_aCl_bSiSiCl_cR^1{}_d$

dans laquelle

- les radicaux $R^1$, identiques ou différents, ont la même signification que R ci-dessus,

- a, b, c et d sont des nombres entiers compris entre 0 et 3 inclus avec :

a + b égal à 3

c + d égal à 3

b + c au moins égal à 3.

Les organotrichlorosilanes préférés sont : $HSiCl_3$ , $CH_3SiCl_3$ , $CH_2 = CHSiCl_3$ et

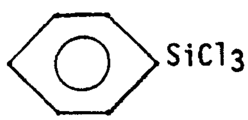

Les organochlorodisilanes préférés sont : $(Cl_2CH_3Si)_2$ et $(CH_2)_2ClSiSiCl_2(CH_3)$

Le diorganodichlorosilane (2) répond à la formule :

$R^2{}_2SiCl_2$

dans laquelle les radicaux $R^2$, identiques ou différents, ont la même signification que R indiquée ci-dessus.

On recommande d'utiliser le diméthyldichlorosilane et le méthyl(hydrogéno)dichlorosilane.

De préférence, le procédé selon l'invention est mis en oeuvre au sein d'un solvant organique tel que, notamment le chlorure de méthylène, le dichlorométhane, le trichloroéthane, l'isopropyléther, l'éthylbutyléther, le dioxane, le tétrahydrofurane, l'hexane, l'heptane, l'octane, le cyclohexane, le benzène, le xylène et le toluène.

L'amine tertiaire organique utilisée à l'étape a) peut être en particulier une trialkylamine dont les radicaux alkyle, identiques ou différents, peuvent présenter de 1 à 20 atomes de carbone telles que la triméthylamine, la triéthylamine, la diméthyléthylamine, ainsi que la pyridine, la diméthyl-N aniline et la picoline.

La pyridine, la picoline et la triéthylamine sont les amines tertiaires préférées.

L'aminolyse de l'étape c) est décrite en détails dans la littérature, en particulier dans US-A-4 689 382 cité comme référence. Elle est mise en oeuvre avec de l'ammoniac $NH_3$ (ammonolyse) ou avec un composé organique ou organosilicié comportant au moins un groupement $NH_2$ ou NH (aminolyse). On voit donc que l'ammonolyse est un cas particulier de l'aminolyse et, dans ce qui suit ou ce qui précède, l'expression aminolyse englobe l'ammonolyse.

Comme exemples de composés comportant au moins un groupement $NH_2$ ou NH et utilisables pour la synthèse des polysilazanes de l'étape c), on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane ; le tétraphényldiméthyldisilazane, le tétraméthydivinyldisilazane, le diméthyldiphényldivinyldisilazane et le tétraméthyldisilazane.

La teneur en eau du mélange réactionnel au cours de l'étape b) est comprise entre 0,06 et 3 %, de préférence entre 0,1 et 1,5 %, par rapport au poids total de composé organosilicié (1) et de diorganodichlorosilane (2).

De façon surprenante on a en effet trouvé selon l'invention que cette teneur en eau, sans perturber l'étape c), est indispensable pour obtenir une masse molaire élevée. Cette eau peut éventuellement être déjà introduite totalement ou partiellement au cours de l'étape a).

Une teneur en eau inférieure à 0,06 % ne permet pas d'obtenir un polysilazane aux caractéristiques visées. Une teneur supérieure à 3 % en poids conduit à une fibre céramique ayant des propriétés thermomécaniques insuffisantes.

Les réactions a) et c) sont mises en oeuvre, de préférence sous atmosphère inerte et sous pression normale. La température de ces réactions est comprise entre -20 et +80 °C, de préférence ces réactions sont mises en oeuvre à la température ambiante (25 °C).

Dans le cas où au cours de l'étape c), on utilise de l'ammoniac. Il est recommandé d'effectuer l'ammonolyse en faisant passer de l'ammoniac, de préférence à l'état gazeux, suivant une quantité comprise entre 4 et 16 fois la quantité stoechiométrique à une température comprise entre -20 et +50 °C.

En fin de réaction, les chlorhydrates d'amines formés peuvent être éliminés par exemple par simple filtration. Les amines constitutives de ces chlorhydrates d'amine, proviennent de l'amine organique tertiaire utilisée à l'étape a) et de l'agent d'aminolyse ($NH_3$ ou composé à groupement NH ou $NH_2$) utilisé à l'étape c). Le polyorganosilazane est séparé du solvant par tout moyen conventionnel, en particulier par simple évaporation.

Comme indiqué ci-dessus le rapport molaire du composé organosilicié (1) sur le diorganosilane (2), est compris entre 0,1 et 9, de préférence entre 1 et 4.

En mettant en oeuvre le procédé de l'invention on obtient généralement un polyorganosilazane de masse molaire en poids supérieur à 15 000, et même à 30 000 g/mole exprimée en équivalent

polystyrène linéaire avec un rendement pondéral en silicium supérieur à 90 % et même 95 %.

Ce polyorganosilazane peut être directement utilisable comme précurseur de céramique avec un rendement en céramique élevé généralement supérieur à 50 % et même 60 % en poids, par pyrolyse à une température comprise entre 800 et 1 400 °C.

Il est également possible de traiter ultérieurement le polyorganosilazane obtenu selon le procédé de l'invention par un catalyseur choisi parmi $HClO_4$ et $CF_3SO_3H$ selon EP-A-0 197 863 (= US-A-4 689 382) afin d'augmenter encore sa masse moléculaire.

Ce précurseur, avec ou sans traitement ultérieur, est particulièrement utile pour revêtir ou imprégner des supports rigides ou souples, en métal ou en fibres céramiques.

Il peut être en outre filé, et pyrolysé en fibre céramique en utilisant par exemple les procédés et les dispositifs enseignés par US-A-3 853 567 ET EP-A-245 047.

Dans ce qui suit ou ce qui précède, sauf indications contraires expresses, les parties et pourcentages sont en poids.

L'invention est illustrée dans les exemples suivants.

Dans ces exemples les masses molaires moyennes en poids, Mw sont déterminées par chromatographie par perméation de gel (GPC), et exprimées en équivalent polystyrène linéaire.

## - EXEMPLE 1 :

Dans un réacteur, maintenu sous atmosphère inerte ($N_2$), de 1 litre à double enveloppe muni d'une agitation mécanique, d'un thermomètre, d'un tube d'introduction des gaz et d'un condenseur, on introduit 200 ml d'isopropyléther sec, 43,9 ml de méthyltrichlorosilane (1) et 30,2 ml de pyridine, correspondant à une quantité stoechiométrique de pyridine par rapport au silane.

Après environ 10 minutes d'agitation à température ambiante, on constate que la réaction du silane (1) avec la pyridine est complète et on ajoute alors 15 ml de diméthyldichlorosilane (2), ce qui correspond à un rapport molaire silane (1)-/silane (2) de 3 et 200 ml d'isopropyléther sec. La teneur en eau du mélange réactionnel est d'environ 1,3 % en poids par rapport au poids total des silanes (1) et (2) engagés.

Après homogénéisation on introduit $NH_3$ gazeux, à un débit d'environ 12,5 ml/s pendant environ 1 heure. Durant l'amminolyse, la température du mélange réactionnel est maintenue entre -10 et +10 °C.

En fin de réaction, on filtre sans aucune difficulté le chlorure d'ammonium et le chlorhydrate de pyridium formés sur verre fritté (diamètre moyen des pores 10 μm) et on récupère une solution limpide de polyméthylsilazane.

Après évaporation du solvant, on obtient 32 g de polysilazane. Le rendement R (basé sur le silicium) est de 95 %. Le polysilazane a un Mw de 35 000 g/mole.

## - EXEMPLE 2 :

On répète exactement le mode opératoire de l'exemple 1, sauf que l'on introduit :
- 35, 3 ml de silane (1)
- 24,2 ml de pyridine
- 25,8 ml de silane (2)

La teneur en eau du mélange réactionnel est de environ 1,3 % par rapport au poids total des silanes (1) et (2). Le rapport molaire silane (1)-/silane (2) est donc de 1,5 et une quantité stoechiométrique de pyridine est donc utilisée par rapport au silane (1).

On obtient 36 g de polysilazane de Mw = 15 000 g/mole avec un rendement R de 95,5 %.

## - EXEMPLE COMPARATIF 3 :

Dans le réacteur de l'exemple 1 on introduit :
- 200 ml d'isopropyléther,
- 43,9 ml de silane (1) et
- 15 ml de silane (2)

On homogénéise le mélange et on ajoute :
- 30,2 ml de pyridine sèche et
- 200 ml d'isopropyléther sec.

La teneur en eau du mélange réactionnel est de 0,30 %.

On met en oeuvre la coammolyse dans les mêmes conditions que celles décrites à l'exemple 1.

On récupère 21,9 g de polyméthylsilazane.
Mw = 7 200 g/mole
R = 65 %.

## - EXEMPLE COMPARATIF 4 :

On répète exactement le mode opératoire de l'exemple comparatif 3 sauf que l'on ajoute 150,6 ml de pyridine sèche, ce qui correspond à plus de 3 fois la quantité stoechiométrique nécessaire pour complexer les silanes (1) et (2).

La teneur en eau du mélange réactionnel est de 0,30 %.

On récupère 20 g de polyméthylsilazane.
Mw : 6 800 g/mole
R = 59,4 %.

- EXEMPLE COMPARATIF 5 :

On répète exactement le mode opératoire de l'exemple 1 sauf que l'on utilise de la pyridine préalablement séchée. La teneur en eau du milieu réactionnel est inférieure à 0,06 %.

On récupère 27,6 g de polysilazane.

Mw : 2 800

R : 84 %.

## Revendications

1. - Procédé de préparation de polyorganosilazane, caractérisé en ce que :

a) - on fait réagir au moins un composé organosilicié (1) présentant par molécule au moins 3 atomes de chlore sur une quantité au moins sensiblement stoechiométrique d'une ami ne tertiaire organique,

b) - on ajoute au produit obtenu en a) un diorganodichlorosilane (2) suivant un rapport molaire (1)/(2) compris entre 0,1 et 9, en présence de 0,06 à 3 % en poids d'eau par rapport au poids total du composé (1) et du silane (2), cette eau pouvant être introduite totalement ou partiellement à l'étape a),

c) - on effectue l'aminolyse du mélange obtenu sous b) en ajoutant un composé comportant au moins un groupe $NH_2$ ou NH,

d) - on élimine les chlorhyrates d'amine formés et on sépare le polyorganosilazane.

2. - Procédé selon la revendication 1, caractérisé en ce qu'il est mis en oeuvre dans un solvant organique qui est éliminé à la fin de l'étape (d).

3. - Procédé selon la revendication 1 ou 2, caractérisé en ce que, au cours de l'étape a), on fait réagir une quantité au moins sensiblement stoechiométrique d'une amine tertiaire choisie parmi la pyridine, la picoline et la triéthylamine.

4. - Procédé selon l'une quelconque des revendications précédentes, caractérisé en ce que l'on utilise une quantité sensiblement stoechiométrique d'une amine tertiaire organique.

5. - Procédé selon l'une quelconque des revendications précédentes, caractérisé en ce que le rapport molaire du composé organosilicié (1) sur le diorganosilane (2) est compris entre 1 et 4 et en ce que la teneur en eau du mélange réactionnel obtenu à l'étape b) est compris entre 0,1 et 1,5 % en poids.

6. - Procédé selon l'une quelconque des revendications précédentes, caractérisé en ce que le composé organosilicié (1) est choisi parmi :

- les organotrichlorosilanes de formule :

$RSiCl_3$

dans laquelle R est choisi parmi un atome d'hydrogène et les radicaux alkyle en $C_1$-$C_6$, vinyle et phényle,

- les organochlorodisilanes de formule :

$R^1{}_aCl_bSiSiCl_cR^1{}_d$

dans laquelle

- les radicaux $R^1$, identiques ou différents, ont la même signification que R ci-dessus,

- a, b, c et d sont des nombres entiers compris entre 0 et 3 inclus avec :

a + b égal à 3

c + d égal à 3

b + c au moins égal à 3.

7. - Procédé selon l'une quelconque des revendications précédentes, caractérisé en ce que le diorganodichlorosilane (2) répond à la formule

$R^2{}_2SiCl_2$

dans laquelle les radicaux $R^2$, identiques ou différents, ont la même signification que R indiquée cidessus.

8. - Céramique obtenue par pyrolyse d'un polyorganosilazane obtenu par la mise en oeuvre d'un procédé tel que défini à l'une quelconque des revendications 1 à 7.

Office européen des brevets

# RAPPORT DE RECHERCHE EUROPEENNE

Numéro de la demande

**EP 90 42 0420**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 237 199 (TOA NENRYO)<br>* Revendications 1,6,7,11,12,13,14,16; page 3, lignes 6-20 * | 1-7 | C 08 G 77/62<br>C 08 G 77/54<br>C 04 B 35/58 |
| Y | EP-A-0 327 773 (ATOCHEM)<br>* Revendications 1,5,6,9,10,11,12; page 4, lignes 55-58; page 5, lignes 1-7 * | 1-7 | |
| A | EP-A-0 235 486 (RHONE-POULENC)<br>* Revendications 1,2 * | 1 | |
| P,Y | EP-A-0 351 262 (ATOCHEM)<br>* Revendications 1,4,5,8; page 3, lignes 52-55 * | 1 | |

DOMAINES TECHNIQUES RECHERCHES (Int. Cl.5)

C 08 G
C 04 B

Le présent rapport de recherche a été établi pour toutes les revendications

| Lieu de la recherche | Date d'achèvement de la recherche | Examinateur |
|---|---|---|
| La Haye | 18 décembre 90 | DEPIJPER R.D.C. |

CATEGORIE DES DOCUMENTS CITES

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant